# FASCICULE DE BREVET EUROPEEN

(11) **EP 0 989 348 B1**
(45) Date de publication et mention de la délivrance du brevet: **07.05.2003**
(21) Numéro de dépôt: 99420199.4
(22) Date de dépôt: 21.09.1999
(51) Int. Cl.: F16L 13/14, F16L 21/08, F16L 37/084

(54) **Dispositif de raccordement instantané pour tuyau**
Vorrichtung zum Schnellverbinden von Rohren
Quick-acting pipe coupling

(30) Priorité: 22.09.1998 FR 9811980
(43) Date de publication de la demande: 29.03.2000
(73) Titulaire: COMAP société anonyme, F-69008 Lyon (FR)
(72) Inventeur: Tuffe, Stéphane, 69740 Genas (FR)
(74) Mandataire: Maureau, Philippe

(56) Documents cités:
- EP-A- 0 922 896
- DE-A- 2 418 625
- GB-A- 2 177 174
- US-A- 2 201 372

## Description

La présente invention concerne un dispositif de raccordement instantané pour tuyau, notamment un tuyau destiné à conduire un liquide.

Le domaine d'application de la présente invention est le raccord de tuyaux destinés à conduire des fluides qui se trouvent sous une pression de quelques bars. Il peut par exemple s'agir de conduites d'eau telles les conduites d'eau à usage sanitaire ou chauffage.

On connaît des dispositifs de raccordement dans lesquels il suffit d'introduire l'extrémité d'un tuyau à raccorder et de la pousser axialement vers l'intérieur du dispositif pour réaliser un raccord présentant une bonne étanchéité et une bonne tenue mécanique. De tels dispositifs de raccord comportent généralement une pièce annulaire présentant à sa périphérie des dents qui s'étendent radialement vers l'intérieur mais qui sont toutes inclinées, par rapport au plan transversal dans lequel se trouve la pièce annulaire, vers l'intérieur du dispositif de raccordement. Le diamètre mesuré aux extrémités libres des dents est inférieur au diamètre extérieur du tuyau à raccorder. Toutefois, ces dents présentent une certaine élasticité qui, combinée à l'inclinaison des dents permet l'introduction du tuyau à raccorder dans le dispositif de raccordement. Une fois l'extrémité du tuyau introduite et engagée dans le dispositif de raccordement, un retrait de celui-ci est empêché par les dents qui viennent alors prendre appui sur la surface extérieure du tuyau et qui viennent s'arc-bouter. La pièce annulaire et ses dents réalisent donc la tenue mécanique de l'extrémité du tuyau dans le dispositif de raccordement. Un (ou plusieurs) joint(s) réalise(nt) l'étanchéité au niveau de ce raccord.

Les raccords de ce type connus comportent une douille dans laquelle est généralement monté un joint. Un ensemble comportant une pièce annulaire avec des dents élastiques est alors monté à une extrémité de la douille. Cet ensemble comporte par exemple une butée pour permettre le positionnement axial de la pièce annulaire dentée, la pièce annulaire dentée, un bouton-poussoir qui sert d'une part à libérer un tuyau raccordé en agissant sur les dents élastiques pour les pousser vers l'intérieur de la douille et d'autre part de contrebutée pour empêcher un retrait de la pièce annulaire dentée lorsqu'une traction est exercée sur le tuyau tendant à faire sortir le tuyau du dispositif de raccordement, ainsi qu'une bague extérieure permettant la fixation des trois pièces précédentes sur la douille de raccordement.

L'inconvénient de ce type de dispositif est sa relative complexité et de ce fait son prix de revient relativement élevé. En effet, on retrouve là un ensemble de plusieurs pièces à venir assembler sur une douille.

Il est connu, du brevet US 2 201 372, de réaliser un dispositif de raccordement instantané comportant une douille destinée à recevoir un joint et une bague d'accrochage munie de dents élastiques inclinées par rapport à un plan transversal. Cette douille est de forme générale cylindrique circulaire, et est déformée localement de manière à présenter un logement annulaire dans lequel sont logés le joint et la bague d'accrochage. De plus, cette douille est dotée d'une extrémité pouvant être sertie de manière à maintenir le joint ainsi que la bague d'accrochage dans leur logement. Dans le document EP 0 922 896, il est indiqué, d'une part, que le joint et la bague d'accrochage sont maintenus par sertissage, et d'autre part, que la douille présente une zone circulaire permettant la fixation de la douille dans le tuyau à raccorder par sertissage. Néanmoins, l'inconvénient de ces dispositifs réside dans le fait que, après raccordement et donc coulissement du tuyau au travers de la bague d'accrochage, ce tuyau peut être rayé au niveau du joint. L'étanchéité ne se fait donc pas dans de bonnes conditions.

La présente invention a alors pour but de proposer un nouveau dispositif de raccordement, de type instantané, permettant de pallier les inconvénients précédemment évoqués.

À cet effet, le dispositif qu'elle propose est un dispositif selon la revendication 1.

Ce dispositif de raccordement permet ainsi d'assurer, après raccordement, que le tuyau n'est pas rayé au niveau du joint De plus, ce dispositif est facile à réaliser. Il met très peu de pièces en oeuvre. La douille peut présenter une forme facile à réaliser. En effet, il suffit de réaliser dans celle-ci un logement pour recevoir le joint et la bague d'accrochage. Cette douille est de longueur suffisante pour présenter une zone permettant un sertissage après raccordement d'un tuyau. Ceci permet alors de garantir l'indémontabilité du raccord et aussi d'avoir un raccord simple et fiable. Le fait de prévoir un sertissage permet d'éviter tout mouvement du tuyau raccordé par rapport à la douille. Ces mouvements sont à éviter pour ne pas abîmer le joint, car ces mouvements sont transmis à la bague d'accrochage qui les transmet au joint. Le sertissage permet d'éviter toute interaction entre la bague d'accrochage et le joint, même lors d'importantes variations de pression dans le raccord.

Un autre avantage d'un raccord selon l'invention par rapport à un raccord à sertir est qu'il est plus facile de réaliser le montage d'un circuit avec un tel raccord. En effet, les tuyaux peuvent être tous mis en place dans les raccords et on peut par la suite venir sertir tous les raccords. Ceci peut être réalisé même après mise sous pression du circuit.

La zone cylindrique circulaire destinée à être sertie est disposée par exemple entre, d'une part, le logement recevant la bague d'accrochage et le joint d'étanchéité, et d'autre part, une butée réalisée à l'intérieur de la douille et destinée à limiter l'enfoncement d'un tuyau à raccorder par rapport au dispositif.

Dans une première forme de réalisation d'un dispositif de raccordement selon l'invention, la bague d'accrochage est placée à côté du joint dans le logement.

Dans une seconde forme de réalisation d'un dispositif de raccordement selon l'invention, la bague d'accrochage est noyée par surmoulage partiellement dans le joint, au moins les extrémités des dents étant libres. Dans ce cas, l'ensemble formé par le joint et la bague d'accrochage est disposé dans le logement prévu à cet effet dans la douille de telle manière que la bague d'accrochage se trouve en aval, c'est -à-dire vers l'intérieur de la douille.

Pour préserver le joint lors de la fabrication du raccord, celui-ci est avantageusement protégé par une rondelle anti-extrusion placée à côté de lui, du côté de l'extérieur de la douille. Dans ce cas, la rondelle anti-extrusion présente un diamètre intérieur légèrement supérieur au diamètre extérieur du tube à raccorder. Un jeu est alors réalisé entre la rondelle anti-extrusion et le tuyau à raccorder.

De toute façon, l'invention sera bien comprise à l'aide de la description qui suit, en référence au dessin schématique annexé représentant à titre d'exemples non limitatifs des dispositifs de raccordement selon l'invention.
Figure 1 est une vue en coupe longitudinale d'une douille présentant à chacune de ses extrémités un dispositif de raccordement selon l'invention, les deux dispositifs de raccordement étant différents aux deux extrémités de la douille,
Figure 2 est une vue de côté d'une bague d'accrochage isolée de la figure 1,
Figure 3 est une vue de face de la bague d'accrochage de la figure 2,
Figure 4 est une vue semblable à la figure 1 montrant deux autres formes de réalisation,
Figure 5 montre en vue de côté les joint et bague d'accrochage isolés de la figure 4,
Figure 6 est une vue de face de l'ensemble montré à la figure précédente, et
Figure 7 est une autre vue semblable à la figure 1 montrant deux autres formes de réalisation.

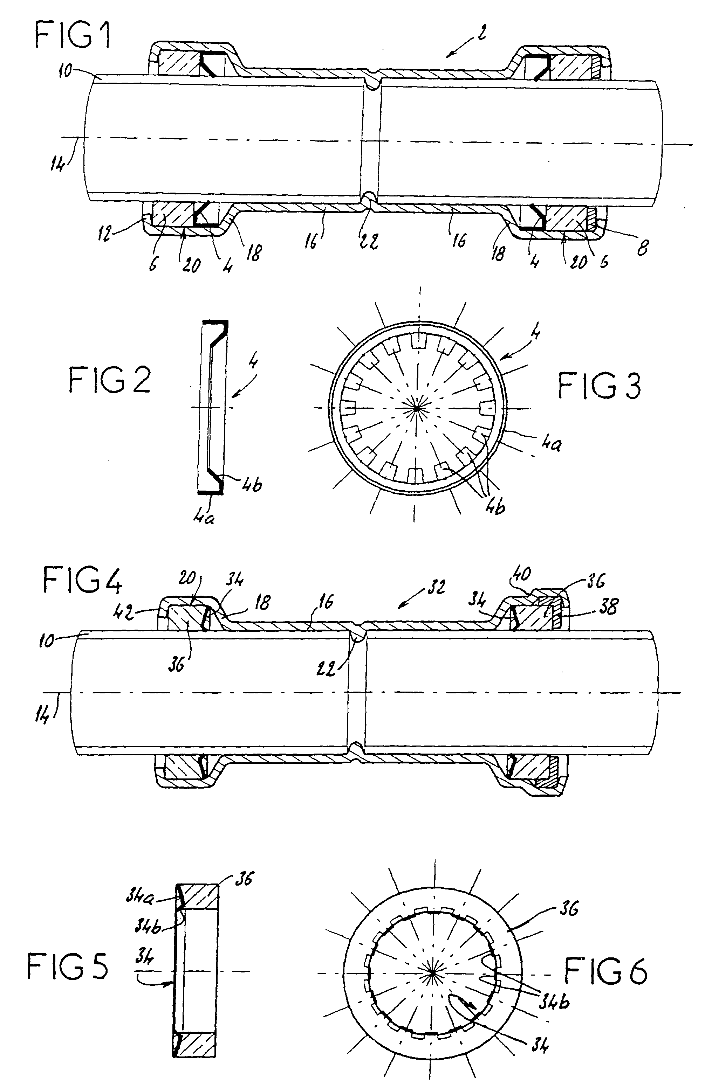

La figure 1 montre une douille 2, par exemple en cuivre, à l'intérieur de laquelle se trouvent un première ensemble constitué d'une première bague d'accrochage 4 et d'un joint 6, et un second ensemble constitué d'une seconde bague d'accrochage 4, d'un joint 6 et d'une rondelle 8 anti-extrusion

La douille 2 présente une forme générale cylindrique tubulaire de section circulaire. Elle présente un diamètre intérieur sensiblement égal au diamètre extérieur d'un tuyau 10 à raccorder sur la plus grande partie de sa longueur. Elle présente un diamètre intérieur plus important au niveau des deux ensembles comportant la première bague 4 et le joint 6. Ainsi, la paroi intérieure de la douille 2 présente un logement à chaque extrémité pour recevoir les bagues d'accrochage 4 et les joints 6.

Les bagues d'accrochage 4 et les joints 6 sont sertis dans la douille 2. Comme on peut le voir sur la figure 1, les extrémités gauche et droite de la douille présentent une lèvre 12 repliée vers l'intérieur. Avant le sertissage, les lèvres 12 sont sensiblement parallèles à l'axe 14 de la douille 2.

La surface intérieure de la douille 2 présente, à partir de son centre, une première zone 16 présentant un diamètre intérieur sensiblement égal au diamètre extérieur du tuyau 10 à raccorder, puis un élargissement 18 jusqu'à atteindre un diamètre intérieur sensiblement égal au diamètre extérieur de la bague d'accrochage 4 ou du joint 6, ensuite une seconde zone 20 servant de logement à la bague d'accrochage 4, au joint 6 et éventuellement à la rondelle 8 et enfin la lèvre 12. Au centre de la douille destinée à recevoir le tuyau à raccorder, la face intérieure de la douille comporte une nervure annulaire 22 servant de butée lors de l'introduction du tuyau 10 à raccorder.

La bague d'accrochage 4 est une bague métallique, par exemple en acier, qui comporte une partie annulaire extérieure 4a à la périphérie intérieure de laquelle sont régulièrement rattachées des dents élastiques 4b. La partie annulaire extérieure 4a se présente sous la forme d'un petit manchon centré sur l'axe 14 de la douille 2. Les dents 4b sont inclinées vers l'intérieur de la douille 2. Le diamètre mesuré aux extrémités libres des dents 4b est inférieur au diamètre extérieur du tuyau 10 à raccorder. La partie annulaire extérieure 4a présente quant à elle un diamètre intérieur supérieur au diamètre extérieur de ce tuyau 10.

Comme indiqué ci-dessus, avant la mise en place de la bague d'accrochage 4, du joint 6 et éventuellement de la rondelle 8 dans la douille 2, la lèvre extérieure 12 est sensiblement parallèle à l'axe 14. L'ensemble devant être logé dans la zone 20 peut alors être introduit dans la douille 2. Il vient en butée contre la zone de l'élargissement 18. On vient alors sertir cet ensemble dans la douille 2 en venant rabattre la lèvre 12 vers l'axe 14 de la douille de manière à empêcher tout retrait de l'ensemble introduit dans le logement prévu à cet effet hors de la douille sans déformation de la lèvre 12. La présence de la rondelle 8 prévient la sollicitation axiale du joint 6 lors de cette opération de sertissage.

Le joint 6 est une joint de forme annulaire présentant une section rectangulaire. Son diamètre intérieur correspond sensiblement au diamètre extérieur du tuyau à raccorder 10 tandis que son diamètre extérieur correspond au diamètre intérieur de la zone 20 formant logement. Les diverses tolérances sont définies en fonction des pressions régnant au niveau du raccord et aussi du fluide destiné à circuler dans le tuyau à raccorder 10.

La rondelle 8 anti-extrusion est une rondelle métallique, par exemple en acier. Toutefois, il est possible d'envisager la réalisation de cette rondelle dans une matière synthétique. Le diamètre intérieur de cette rondelle 8 est légèrement supérieur au diamètre extérieur du tuyau à raccorder de telle sorte qu'un léger jeu subsiste entre la rondelle 8 et le tuyau 10.

Dans le logement réalisé au niveau de la zone 20 de la douille 2, on trouve dans le sens allant de l'intérieur de la douille vers l'extérieur, la bague d'accrochage 4, le joint 6 et le cas échéant la rondelle 8.

Le raccordement du tuyau 10 se fait de la manière suivante. L'inclinaison et l'élasticité des dents de la bague d'accrochage permettent l'introduction de l'extrémité du tuyau à raccorder 10 à l'intérieur de la douille sans être un obstacle à cette introduction. Le joint 6 permet de réaliser l'étanchéité au niveau du raccordement. Lorqu'une traction est exercée sur le tuyau à raccorder 10 tendant à faire sortir ce dernier de la douille 2, les forces de frottement au niveau des dents de la bague d'accrochage et de la surface extérieure du tuyau 10 tendent à faire retourner les dents de la bague d'accrochage dans leur position de repos montrée à la figure 2. Toutefois, la présence de l'extrémité du tuyau à raccorder empêche ce retour. Les dents s'arc-boutent et retiennent le tuyau comme des griffes. Ce système de raccordement est connu de l'homme du métier. Pour garantir le caractère indémontable du raccord ainsi réalisé, et empêcher tout mouvement relatif entre le tuyau 10 et le joint 6, l'utilisateur réalise un sertissage au niveau de la zone 16 de la douille 2. Ce sertissage est effectué entre la zone 20 servant de logement au joint et à la bague d'accrochage, et la butée 22. On peut se servir éventuellement de l'élargissement 18 pour positionner l'outil permettant de réaliser le sertissage. En rendant solidaire la douille et l'extrémité du tuyau 10, on évite tout mouvement relatif entre la bague 4 en prise sur le tuyau 10 et le joint 6 logé dans la douille 2, même lors de fortes variations de pression à l'intérieur du tuyau 10. La bague 4 n'endommage alors pas le joint 6 qui assure sa fonction d'étanchéité.

La combinaison de la bague d'accrochage 4 avec un sertissage favorise l'accrochage du tuyau 10 dans le raccord. Cette solution est adaptée au raccordement de tuyaux de petits diamètres mais est surtout intéressante pour les tuyaux de gros diamètres (supérieurs à 50 mm). Avec un effort de sertissage inférieur à l'effort exercé pour sertir un raccord à sertir de même diamètre, on obtient un meilleur ancrage du tuyau dans le raccord.

Le fait de prévoir le joint 6 en amont de la bague d'accrochage 4, permet que le tube raccordé 10 ne soit pas rayé par les dents 4b au niveau du joint 6. Ceci contribue à la prévention contre d'éventuelles fuites.

La figure 4 montre deux variantes de réalisation des dispositifs de raccordement de la figure 1. On retrouve ici une douille 32 avec deux logements, un logement renfermant un ensemble formé par une bague d'accrochage 34 et un joint 36 et l'autre logement renfermant un ensemble formé par une bague d'accrochage 34, un joint 36 et une bague anti-extrusion 38. Les différences avec les dispositifs de la figure 1 sont que la bague d'accrochage 34 est noyée dans le joint 36, que la bague d'accrochage présente une forme différente de celle des figures 2 et 3 et que la bague anti-extrusion 38 présente une forme distincte de la rondelle 8. Du fait de la forme de la bague 38, la forme de la douille 32 diffère légèrement de la forme de la douille 2 au niveau du logement accueillant la bague 38.

La bague d'accrochage 34 présente une partie annulaire extérieure 34a et des dents 34b élastiques qui s'étendent radialement vers l'intérieur de la douille 32 tout en étant inclinées vers l'intérieur de la douille. La partie annulaire 34a n'est plus cylindrique comme pour la bague d'accrochage 4, mais est une rondelle qui est légèrement inclinée par rapport à un plan transversal de la douille. L'inclinaison de la rondelle 34a est opposée à l'inclinaison des dents 34b et permet à la rondelle de prendre appui sur la surface intérieure de la douille.

Cette bague d'accrochage est noyée dans le matériau constitutif du joint 36. Cet ensemble présente ainsi une forme annulaire de section rectangulaire, les dents 34b de la bague d'accrochage dépassant vers l'intérieur de cet ensemble annulaire.

La bague d'accrochage 34 se trouve près d'une extrémité du joint 36 et l'ensemble donné par la bague d'accrochage 34 et le joint 36 est disposé de telle sorte dans son logement que la bague d'accrochage 34 se trouve vers l'intérieur de la douille 32.

La bague anti-extrusion 38 vient protéger le joint 36 non seulement sur la face frontale de celui-ci mais aussi latéralement, du côté de la douille 32. La section de cette bague 38 se présente donc sous la forme d'un angle droit. De même que pour la rondelle 8, le diamètre intérieur de cette bague est légèrement supérieur au diamètre extérieur du tuyau à raccorder de manière à laisser subsister un léger jeu entre la bague 38 et le tuyau 10. Le matériau utilisé pour réaliser cette bague anti-extrusion est par exemple de l'acier.

Le logement de la douille 32 est adapté pour loger la bague d'accrochage 34 noyée dans le joint 36 ainsi que la bague anti-extrusion 38. On a ainsi un élargissement 40 au niveau de la zone de logement de cette bague anti-extrusion 38.

La réalisation de ces dispositifs est semblable à la réalisation des dispositifs représentés à la figure 1. On vient également emprisonner l'ensemble comportant le joint 36, la bague d'accrochage 34 et éventuellement la bague anti-extrusion 38 par sertissage en venant replier une lèvre 42 de la douille 32.

Le fonctionnement des dispositifs de raccordement de la figure 4 est en tous points semblable à celui des dispositifs de la figure 1. On retrouve ici aussi le même effet de coopération entre le sertissage et la bague d'accrochage pour la réalisation d'un meilleur accrochage.

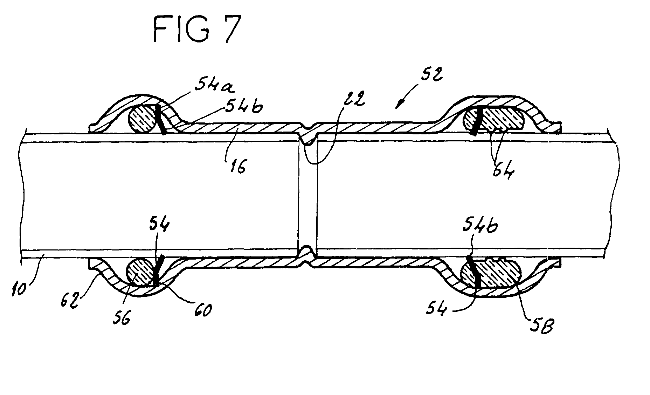

La figure 7 montre deux autres variantes de réalisation de dispositifs de raccordement selon l'invention. On retrouve ici une douille 52 avec deux logements, un logement renfermant un ensemble formé par une première bague d'accrochage 54 et un joint torique 56 et l'autre logement contenant un ensemble formé par une seconde bague d'accrochage 54 identique à l'autre bague d'accrochage 54 et un joint de forme 58 dans lequel est noyée la seconde bague d'accrochage 54. Cette figure 7 montre des logements de formes légèrement différentes de celles des logements des figures 1 et 4. Alors que dans ces figures 1 et 4 le logement présentait une section sensiblement rectangulaire, les logements représentés à la figure 7 présentent une section plutôt arrondie.

Les bagues d'accrochages 54 présentent chacune une partie annulaire extérieure 54a et des dents 54b élastiques qui s'étendent radialement vers l'intérieur de la douille 52 tout en étant inclinées par rapport à un plan transversal de cette douille. La partie annulaire 54a est une rondelle qui est disposée dans un plan transversal de la douille 52. Une surface d'appui 60 est prévue dans le logement correspondant pour servir de support à sa rondelle 54a.

Le joint 56 est un joint torique. Il se trouve, par rapport à la bague d'accrochage 54, du côté de l'ouverture de la douille 52 par laquelle on introduit l'extrémité du tuyau 10.

Pour mettre en place la bague d'accrochage 54 et le joint torique 56, on procède de la même manière que décrite précédemment en référence aux figures 1 et 4. On retrouve ainsi dans ce mode de réalisation une lèvre de sertissage 62 au niveau de l'extrémité de la douille 52.

De même que pour les formes de réalisation des figures 1 et 4, la douille 52 comporte une nervure annulaire 22 servant de butée lors de l'introduction du tuyau 10 à raccorder. De part et d'autre de cette nervure annulaire 22, on trouve une zone sensiblement cylindrique circulaire 16 destinée à être sertie une fois que l'extrémité du tuyau 10 est venue en butée contre la nervure annulaire 22.

Sur la partie droite de la figure 7 est représentée une sixième forme de réalisation d'un raccord selon l'invention. Cette forme de réalisation est comparable à la forme de réalisation représentée sur la partie gauche de la figure 4. Ici, comme déjà indiqué, la forme du logement recevant la bague d'accrochage 54 et le joint 58 diffère. La bague d'accrochage 54 utilisée ici est également légèrement différente : au lieu d'avoir une rondelle extérieure 34a inclinée, on a ici une rondelle extérieure 54a disposée dans un plan sensiblement transversal. La forme du joint 58 diffère de celle du joint 36. Ce joint 58 présente une forme générale rectangulaire arrondie sur ses petits côtés. Du côté intérieur, c'est-à-dire du côté destiné à être en contact avec l'extrémité du tuyau 10, le joint 38 présente deux nervures annulaires 64 formant deux lèvres d'étanchéité périphériques. Ces nervures 64 se trouvent entre les dents 54b de la bague d'accrochage 54 et l'ouverture correspondante de la douille 52 destinée à recevoir l'extrémité du tuyau 10 à raccorder.

Par rapport aux dispositifs de raccordement connus comportant une bague d'accrochage comparable aux bagues d'accrochage décrites ci-dessus, les dispositifs selon l'invention présentent quelques avantages.

Un premier avantage est économique. En effet, l'opération de sertissage de la lèvre fermant le logement contenant la bague d'accrochage est facile à réaliser et ne met pas en oeuvre un outillage complexe. Le prix de revient d'un dispositif de raccordement selon l'invention est donc peu élevé. Dans les dispositifs de l'art antérieur à l'invention, il faut réaliser un premier sous-ensemble comportant la bague d'accrochage qui est ensuite monté dans une douille. Outre le fait que le nombre de pièces est plus élevé dans les dispositifs de l'art antérieur, il faut aussi considérer que dans ces dispositifs de nombreuses manipulations, centrages et orientations de pièces sont nécessaires. Ceci nécessite une succession d'étapes de montage alors que pour le dispositif selon l'invention ces étapes sont très limitées. Un raccord selon l'invention peut être monté de façon automatisée.

En outre, grâce au petit nombre de pièces nécessaires pour réaliser un raccord instantané selon l'invention, l'encombrement de ce raccord est réduit. Ce gain de place est important dans le contexte actuel où l'on tend toujours plus à la miniaturisation des dispositifs.

Comme déjà évoquée plus haut, on obtient avec un raccord selon l'invention un excellent accrochage grâce à la combinaison du sertissage de la douille sur l'extrémité du tuyau à raccorder et de la bague d'accrochage. Cet avantage est plus sensible pour les raccordements de tuyaux de grands diamètres.

Enfin, le montage d'un circuit avec des raccords selon l'invention est facile. Il suffit de mettre les tuyaux en place dans les raccords, puis une fois tous les tuyaux installés, les raccords sont sertis.

Comme il va de soi, l'invention ne se limite pas aux formes de réalisation d'un dispositif de raccordement et d'un procédé décrits ci-dessus à titre d'exemples non limitatifs ; elle en embrasse au contraire toutes les variantes dans le cadre des revendications ci-après.

En effet, d'autres formes de douilles, de bagues d'accrochage, de joints, de bagues de protection sont envisageables. Les formes décrites ci-dessus ne sont données qu'à titre d'exemples.

Les matériaux indiqués pour les différents éléments constituant un raccord selon l'invention sont donnés à titre indicatif et peuvent être modifiés en fonction du domaine d'utilisation du raccord.

## Revendications

1. Dispositif de raccordement instantané pour tuyau (10) comprenant une douille (2 ;32 ;52) de forme générale cylindrique, un joint (6 ;36 ;56 ;58) et une bague d'accrochage (4 ;34 ;54) munie de dents élastiques (4b ;34b ;54b) inclinées par rapport à un plan transversal, ou éventuellement radiales, ledit dispositif étant destiné à être fixé sur un tuyau à raccorder par sertissage au niveau d'une zone cylindrique circulaire (16) présentée par la douille, **caractérisé en ce que** le joint (6 ;36 ;56 ;58) et la bague d'accrochage (4 ;34 ;54) sont fixés dans un même logement annulaire ménagé dans la douille, ledit joint étant disposé en amont de la bague d'accrochage, c'est-à-dire du côté d'une ouverture de la douille destinée à recevoir un tuyau à raccorder.

2. Dispositif de raccordement selon la revendication 1, **caractérisé en ce que** la zone cylindrique circulaire (16) destinée à être sertie est disposée entre, d'une part, le logement recevant la bague d'accrochage et le joint d'étanchéité, et d'autre part, une butée (22) réalisée à l'intérieur de la douille et destinée à limiter l'enfoncement d'un tuyau à raccorder (10) par rapport au dispositif.

3. Dispositif de raccordement selon l'une des revendications 1 ou 2, **caractérisé en ce que** la bague d'accrochage (4;54) est placée à côté du joint (6;56) dans le logement.

4. Dispositif de raccordement selon l'une des revendications 1 ou 2, **caractérisé en ce que** la bague d'accrochage (34;54) est noyée partiellement dans le joint (36;58), au moins les extrémités des dents (34b;54b) étant libres, l'ensemble formé par le joint (36;58) et la bague d'accrochage (34;54) étant disposé dans le logement prévu à cet effet dans la douille (32;52) de telle manière que la bague d'accrochage (34;54) se trouve en aval, c'est-à-dire vers l'intérieur de la douille (32;52).

5. Dispositif de raccordement selon l'une des revendications 1 à 4, **caractérisé en ce que** le joint (6;36) est protégé par une rondelle anti-extrusion (8;38) placée à côté de lui, du côté de l'extérieur de la douille.

6. Dispositif de raccordement selon la revendication 5, **caractérisé en ce que** la rondelle anti-extrusion (8;38) présente un diamètre intérieur légèrement supérieur au diamètre extérieur du tube àraccorder (10).

## Patentansprüche

1. Schnellverbindungsvorrichtung für einen Schlauch (10), umfassend eine Hülse (2;32;52) mit allgemein zylindrischer Gestalt, eine Dichtung (6;36;56;58) sowie einen Befestigungsring (4;34;54), der versehen ist mit bezüglich einer Querebene geneigten oder eventuell radialen elastischen Zähnen (4b;34b;54b), wobei die Vorrichtung dazu ausgelegt ist, durch Pressen im Bereich eines durch die Hülse gebildeten kreiszylindrischen Bereichs (16) auf einem zu verbindenden Schlauch befestigt zu werden, **dadurch gekennzeichnet, dass** die Dichtung (6;36;56;58) und der Befestigungsring (4;34;54) in ein und derselben in der Hülse vorgesehenen Ringaufnahme befestigt sind, wobei die Dichtung vor dem Befestigungsring angeordnet ist, d.h. auf der Seite einer Öffnung der Hülse, die dazu ausgelegt ist, einen zu verbindenden Schlauch aufzunehmen.

2. Verbindungsvorrichtung nach Anspruch 1, **dadurch gekennzeichnet, dass** der kreiszylindrische Bereich (16), der dazu ausgelegt ist, gepresst zu werden, zwischen einerseits der den Befestigungsring und die Dichtung aufnehmenden Aufnahme und andererseits einem Anschlag (22) angeordnet ist, der im Inneren der Hülse vorgesehen und dazu ausgelegt ist, das Eindringen eines zu verbindenden Schlauchs (10) bezüglich der Vorrichtung zu begrenzen.

3. Verbindungsvorrichtung nach einem der Ansprüche 1 oder 2, **dadurch gekennzeichnet, dass** der Befestigungsring (4;54) an der Seite der Dichtung (6;56) in der Aufnahme angeordnet ist.

4. Verbindungsvorrichtung nach einem der Ansprüche 1 oder 2, **dadurch gekennzeichnet, dass** der Befestigungsring (34;54) teilweise in die Dichtung (36;58) eingelassen ist, wobei wenigstens die Enden der Zähne (34b;54b) frei sind, wobei die durch die Dichtung (36;58) und den Befestigungsring (34;54) gebildete Gruppe in der zu diesem Zweck in der Hülse (32;52) vorgesehenen Aufnahme derart angeordnet ist, dass sich der Befestigungsring (34;54) dahinter, d.h. zum Inneren der Hülse (32;52) hin befindet.

5. Verbindungsvorrichtung nach einem der Ansprüche 1 bis 4, **dadurch gekennzeichnet, dass** die Dichtung (6;36) durch eine Antiextrusionsscheibe (8;38) geschützt ist, die neben ihr an der Seite des Hülsenäußeren angeordnet ist.

6. Verbindungsvorrichtung nach Anspruch 5, **dadurch gekennzeichnet, dass** die Antiextrusionsscheibe (8;38) einen lnnendurchmesser aufweist, der geringfügig größer als der Außendurchmesser des zu verbindenden Schlauchs (10) ist.

## Claims

1. Device for instantaneous connection for a pipe (10) comprising a sleeve (2;32;52) with a generally cylindrical shape, a seal (6;36;56;58) and a locking ring (4;34;54) provided with resilient teeth (4b;34b;54b) which are inclined relative to a transverse plane, or which are optionally radial, the said device being designed to be secured on a pipe to be connected by being crimped at the level of a circular cylindrical area (16) on the sleeve, **characterised in that** the seal (6;36;56;58) and the locking ring (4;34;54) are secured in a single annular receptacle provided in the sleeve, the said seal being disposed upstream from the locking ring, i.e. on the side of an aperture in the sleeve which is designed to receive a pipe to be connected.

2. Connection device according to claim 1, **characterised in that** the circular cylindrical area (16) which is designed to be crimped is disposed firstly between the receptacle which receives the locking ring and the seal, and secondly a stop (22) which is provided inside the sleeve, and is designed to limit the insertion of a pipe to be connected (10), relative to the device.

3. Connection device according to claim 1 or claim 2, **characterised in that** the locking ring (4;54) is placed adjacent to the seal (6;56) in the receptacle.

4. Connection device according to claim 1 or claim 2, **characterised in that** the locking ring (34;54) is partially embedded in the seal (36;58), at least the ends of the teeth (34b; 54b) being free, the assembly formed by the seal (36;58) and the locking ring (34;54) being disposed in the receptacle provided for this purpose in the sleeve (32;52) such that the locking ring (34;54) is downstream, i.e. towards the interior of the sleeve (32;52).

5. Connection device according to any one of claims 1 to 4, **characterised in that** the seal (6;36) is protected by an anti-extrusion washer (8;38) placed next to it, on the side of the exterior of the sleeve.

6. Connection device according to claim 5, **characterised in that** the anti-extrusion washer (8;38) has an inner diameter which is slightly larger than the outer diameter of the pipe to be connected (10).
